# EUROPEAN PATENT SPECIFICATION

(11) **EP 4 039 997 B1**
(45) Date of publication and mention of the grant of the patent: **22.10.2025**
(21) Application number: 22155454.6
(22) Date of filing: 07.02.2022
(51) Int. Cl.: F16C 27/02, F16C 17/03

(54) **TILTING PAD BEARING, ASSEMBLY OF A CONSTRUCTION ELEMENT AND SUCH A BEARING, AND A METHOD FOR PROVIDING A JOURNAL OPENING HAVING A DESIRED CROSS-SECTION**
KIPPSEGMENTLAGER, ZUSAMMENBAU EINES KONSTRUKTIONSELEMENTES UND EIN SOLCHES LAGER SOWIE VERFAHREN ZUR BEREITSTELLUNG EINER ZAPFENÖFFNUNG MIT EINEM ERWÜNSCHTEN QUERSCHNITT
PALIER À PATINS OSCILLANTS, ENSEMBLE COMPRENANT UN ÉLÉMENT DE CONSTRUCTION ET UN TEL PALIER ET PROCÉDÉ DE FOURNITURE D'UNE OUVERTURE DE PORTÉE D'ARBRE AYANT UNE SECTION TRANSVERSALE SOUHAITÉE

(30) Priority: 05.02.2021 NL 2027506
(43) Date of publication of application: 10.08.2022
(73) Proprietor: Nabuurs, Martinus Johannes Hendricus Wilhelmus, 5825 CB Overloon (NL)
(72) Inventor: Nabuurs, Martinus Johannes Hendricus Wilhelmus, 5825 CB Overloon (NL)
(74) Representative: Verhees, Godefridus Josephus Maria

(56) References cited:
- DE-A1- 102018 220 449

## Description

The present disclosure relates to a tilting pad bearing to be arranged into a mounting hole in a construction element. The disclosure also relates to an assembly comprised of at least one tilting pad bearing and a construction element having at least one mounting hole. Finally, the disclosure relates to a method of providing a tilting pad bearing having a journal opening with a desired cross-section.

High-speed rotating machinery, such as small-scale turbomachinery, electric motors, and high-speed alternators, require some particular type of bearings. Bearings within these applications must be dynamically stable at high-speed and capable to operate within a high-temperate environment. In addition, it is often desired to have a bearing solution with low frictional losses to obtain sufficient efficiency of the device.

Conventional ball bearings are unsuitable for these applications since they are limited in rotational speed and are generally not suitable to operate at temperatures above several hundred degrees Celsius. Oil lubricated journal bearings (i.e. hydrodynamic film bearings) can operate at high rotational speed, but with the cost of large frictional losses. In some applications these large frictional losses are not critical and only play a limited contribution to the overall loss. However, there is a range of energy related applications where these oil-film frictional losses would be responsible for a significant part of the overall loss. In the latter case it has been contemplated in recent years to utilize gas film bearings such as air journal bearings instead. Air journal bearings tend to have lower frictional losses than oil journal bearings and are also able to withstand higher temperatures. However, one of the main disadvantages is their dynamic instability when operating at high rotational speeds. In order to cope with this dynamic instability, aerodynamic foil bearings or aerodynamic tilting pad bearings can be used. Aerodynamic foil bearings are applicable only for shafts with a relatively large diameter, for instance a diameter above 16 mm. Conversely, aerodynamic tilting pad bearings are especially suitable for small shaft sizes, especially for supporting high-speed and small-scale machinery.

A current trend in high-speed rotating machinery is to down-scale the device to an ever smaller scale without reducing its power output. This requires an increase of the device rotational speeds to ultra-high rotational velocities. Rotational speeds of over 400.000 rpm are nowadays no exception. The diameter of the shaft, at the location of the journals/bearings, is then typically in the order of 10 mm or less. In addition, these turbomachinery devices operate at temperatures of several hundred degrees Celsius. Such high temperate is due to fuel combustion which drives the turbine with thermal energy. The rotating turbine can drive, on its turn, a compressor stage and an electrical generator. Providing thereby electrical energy with a far higher power to weight ratio as electrical batteries or conventional combustion engines. These energy related applications require, beside the high rotational speed, also low power losses, so solutions providing low frictional losses are needed.

Tilting pad bearings are a particular type of self-acting fluid bearings (wherein the fluid may be a liquid, a gas, or a combination of both, and wherein self-acting means that there is no external supply of pressurized fluid to the bearing). Such self-acting fluid bearings commonly have an approximately cylindrical opening, also commonly referred to as a bore, in which a rotatable shaft can be arranged. The size of the journal opening is defined by the bearing's inner surface. In case of tilting pad bearings therefore by the inner surface of the tilting pads (i.e. the surfaces facing towards the bearings central axis). Generally, in self-acting fluid bearings, when the shaft rotates inside of this cylindrical opening at nominal speed, it is supported by a thin layer of pressurized fluid such as oil, water, or gas. Pressurization of the fluid is achieved by the rotating shaft which drags the surrounding fluid into a narrowing gap, leading to a pressure rise. This so-called hydrodynamic effect, or aerodynamic in case of a gas, will increase the fluid pressure sufficiently to push the rotating shaft away from the bearing's inner surface so that it is completely suspended and thus rotates without making contact.

To achieve a gap geometry with a desired converging shape and which facilitates the hydro- aerodynamic effect, a geometric point where about a tilting pad pivots must be well chosen. Pivot points (herein also referred to as pivoting elements) (connecting each of the tilting pads with the housing of the bearing) are therefore typically placed radial inwards (or tangential sideways) in relation to the bore's central axis. Meaning that, when compared to a configuration in which the tilting pads form a circular journal opening, one or more pivot points are moved to a position, such that the tilting pads form a journal opening of a different cross-section, such as a non-circular, and a smaller journal opening.

The amount of displacement of a pivoting element and the associated tilting pad along the radial and/or tangential axis and/or the amount of rotation of the pivoting element and the associated tilting pad about the tilt axis (relative to a position with circular journal opening) is referred to as geometric pad preload (in short: geometric preload).

The manner and extent in which a geometric preload is applied determines the bearing self-pressurization capability, as well as many other bearing properties such as: load capacity, frictional losses and dynamic stability. Typical distance over which a pivot point is displaced is in the same order of magnitude as the gas-film thickness, for example about 50% thereof. Gas film thickness is in typically 0.25% to 0.5% of the shaft radius. So, for a 16mm bearing, the gas film could have a thickness of 40um. With 50% thereof as offset, a pivot offset of 20um would occur. However, other thicknesses are also possible.

For many of the existing tilting pad bearings, the extent to which the tilting pads are preloaded is fixed. Hence, it is not possible to change the bearing properties after the bearing has been manufactured. Instead, a new bearing geometry must be designed and fabricated when a change in bearing properties and bearing application is required. Designing these tilting pad bearings separately for each different application and for each set of specific requirements makes the implementation of tilting pad bearings costly. Nowadays, solutions are known wherein the pivot point is displaced in a radial direction, and wherein the amount of displacement is adjustable after the fabrication step. Adjustable design results in a more versatile bearing where its properties could be modified to suit multiple applications.

Another concern with existing self-acting tilting pad bearings is wear during the start-up and run-down phase. During such run-up and run-down phases, the rotational speed will not be sufficient to adequate pressurize the fluid, resulting in semi-contact between journal and the inner surfaces of the tilting pads. Semi-contact/rubbing of this kind leads to undesirable and premature wear of the contact surfaces. This wear is particularly problematic since it takes place over a large and undefined region of these inner surfaces, thereby changing the journal opening and thus deteriorating the bearing performance over time. It is therefore desirable to limit this wear, minimize change to the journal opening and thus minimize bearing performance loss.

A further concern with existing tilting pad bearings is shaft seizure and unrestrained shaft displacement. Each individual tilting pad is connected by its associated pivot point to the bearing housing, and where the connection between pivot point and housing can be either rigid or flexible. The latter case is often referred to as a compliant tilting pad bearing. The compliance within such bearing allows the pad to move radially outwards in case of diametric journal growth. Consequently, compliant tilting pad bearings are robust against centrifugal and thermal journal expansion. Nevertheless, compliance within the pivot points also reduces the overall bearing stiffness, which is (often) undesired. Contrary, a bearing with rigidly mounted pivot point's provides superior stiffness characteristics, but without the possibility to cope with substantial journal expansion. That is, any shaft expansion that exceeds the available bearing gap beneath the pivot points will lead to a catastrophic seizure of the journal. It would be advantageous if the benefits of both rigid and compliant bearings could be combined in a single design.

A tilting pad bearing according to the preamble of appended claim 1 is known from DE 10 2018 220449 A1.

There is a need in the art for tilting pad bearings wherein the above-identified and/or other disadvantages of the known tilting pad bearings are at least partially removed. Furthermore, there is a need to have more generally or even universally applicable tilting pad bearings.

According to a first aspect of the present disclosure, a tilting pad bearing configured to be arranged into a mounting hole in a construction element in accordance with appended claim 1 is provided.

The tilting pad bearing comprises:
a deformable housing having a central cavity;
a number of tilting pads pivotably connected to and/or integrally formed with the housing and arranged inside the central cavity, the tilting pads defining a journal opening for insertion of a journal of a rotatable external shaft;
wherein the housing is deformable from a non-deformed state, in which the journal opening has a first cross-section, to a deformed state in which the journal opening has a second, different cross-section;wherein the housing is deformable as it comprises one or more rigid parts and one or more flexible housing parts, wherein the rigid parts are interconnected to adjacent rigid parts through the flexible parts, and
wherein each tilting pad is pivotably connected to and/or integrally formed with the respective rigid part of the housing.

Preferably, a first contact element and a second contact element are provided at the circumferential outer surface of the rigid housing part, which each define a contact point on the respective rigid part.

Preferably, each tilting pad is connected to and/or formed with a single housing part and forms therewith tilting pad a monolithic part.

The properties of such a tilting pad bearing can be adapted by varying the extent to which the housing is deformed. That is, a journal opening with this second cross-section is provided by deforming the housing, and this cross-section is maintained by inserting the bearing into the mounting hole (which could be anything like an opening, bore, recess, cavity etc. wherein the bearing can be at least partially accommodated). The deformation of the housing may cause both the size and/or shape of the cross-section of the journal opening to change and thus its properties. Consequently, the same tilting pad bearing can be combined with a mounting hole of another shape and/or size to provide a tilting pad bearing having other cross-section and properties. It is therefore possible to have a single tilting pad bearing design in different applications, which makes this tilting pad bearing more suitable as an off-the-shelf component. Fewer designs, or even just a single design tilting pad bearing, will have to be manufactured and kept in store. This will reduce costs in both design, as well as in manufacturing and logistics.

In an embodiment, one or more tilting pads from the number of tilting pads is connected to and/or integrally formed with the housing via a compliant structure (for instance, a bending/flexible structure/element). The compliant structure may be made of a flexible material, for instance material that has been made flexible by arranging a properly arranged slit in the rigid part of the housing. The compliant structure locally provides sufficient flexibility to the bearing. The compliant structure may be configured to displace the respective tilting pad in radial and/or tangential direction, for instance to accommodate diametric journal growth due to centrifugal or thermal effects.

In an embodiment, the housing is deformed from the non-deformed state to the deformed state when the housing is press-fitted into a mounting hole. In this embodiment, deformation of the housing of the tilting pad bearing has an additional function: It also holds the tilting pad bearing in position so that no attaching means are required when mounting the tilting pad bearing to a construction element. Additionally, the mounting hole generally is prearranged in a construction element, for instance a wall, chassis, frame, mount, support, etc. The dimensions of the mounting hole (i.e. the cross-section or diametrical size) are chosen such that a deformed tilting pad bearing arranged therein will maintain its deformation.

In an embodiment, the tilting pad bearings are tilt-preloaded. In certain embodiments each tilting pad is connected to or integrally formed with the housing via a pivoting element, the pivoting element preferably being made of flexible material. The flexible material enables the tilting pad to pivot between different pivot orientations, whether or not a geometric preload is applied. In the specific case of tilt-preloaded pads, the pivoting element is configured to urge the associated tilting pad in a tilted position relative to the bearing's central axis. In this manner it may be ensured that wear only occurs in areas of the tilting pads (for instance, the trailing edge of the tilting pad) which are less critical for their proper functioning.

In an embodiment, the journal opening's first cross-section is circular and its second (or deformed) cross-section is non-circular. A bearing with such an initial circular cross section can be manufactured using a relatively cost effective and accurate method such as turning, while upon deformation the journal opening can acquire the desired non-circular form, which is then maintained by inserting the bearing into a mounting hole.

In embodiments, in the non-deformed and deformed states, the journal opening has respectively a first and second cross-sectional area, wherein the second cross-sectional area is smaller than the first cross-sectional area. In particular, in the deformed state a cross-sectional area is 0,01%-5% smaller, or 0,1%-3% smaller, or, preferably, 0,1%-1,0% smaller, than in the non-deformed state (i.e. in the non-deformed, state).

In embodiments of the tilting pad bearing, the housing of the tilting pad bearing is configured to change the size of the second cross-sectional area by adapting the extent to which the housing is deformed and/or wherein the housing is configured to be deformed to a first extent to provide a first size of the second cross-sectional area or to be deformed to a second extent to provide a second size of the second cross-sectional area. The extent in which a housing is deformed may be dependent on the size of the external shaft to be accommodated into the journal opening. When the bearing is intended to accommodate an external shaft having a relatively small diameter the extent of deformation needs to be larger than the extent of deformation needed to accommodate an external shaft having a larger diameter (in cross-section) in order to be able to ensure that the bearing may be operate correctly for both the small diameter shaft and the large diameter shaft. The fact that in embodiments of the present disclosure the bearing can be used to easily accommodate external shafts of varying sizes makes the bearing more versatile and removes the need to manufacture differently sized bearing and/or have these differently sized bearings in stock.

In embodiments of the tilting pad bearing the housing comprises one or more rigid housing parts and one or more flexible housing parts. The rigid and flexible housing parts are arranged relative to each other in such a manner that when the housing is inserted into a mounting hole, the tilting pads are placed at suitable positions relative to the central axis. Preferably each tilting pad is pivotably connected to and/or integrally formed with a respective rigid housing part.

In certain embodiments the housing or a part thereof, the associated tilting pads and their pivoting element form a single monolithic part. Such monolithic design may increase the accuracy of the bearing which is particularly relevant when manufacturing relatively small bearings.

In embodiments of the tilting pad bearing the pivoting element is configured so as to urge the associated tilting pad into a tilted orientation relative to the housing. Preferably a distance between the pad trailing edge and the bearing central axis is smaller than the distance between the leading edge and the bearing central axis.

Each tilting pad defines a leading portion and a trailing portion relative to an intended rotation direction of the journal. A pivoting element may be arranged in (i.e. connected to) the leading portion of the tilting pad rather than in the trailing portion of the tilting pad. A tilt-preload (or an *a priori* bias torque applied on the tilting pads by arranging the tilting pads in respective tilted orientations, the tilt-preload therefore being a force (moment)) must be applied. Arranging the pivoting point position closer to the leading edge of the tilting pad than to the trailing edge thereof permits a larger bearing gap width (W) (the bearing gap width (W) being defined as the width of the gap at the location of the pivot point/element, i.e. the local distance between journal surface (when inserted) and the pad surface at the location of the (rigid/fixed) pivot point/element. This may provide a better robustness against geometric manufacturing errors or thermal/centrifugal shaft expansion. More specifically, it is known that during use, a shaft may warm up and expand. Expansion of the shaft in radial direction due to thermal or centrifugal effects will then less quickly consume this bearing gap. Hence shaft seizure with destructive consequences will occur less likely for such bearing with pivoting elements arranged in the leading portion of the tilting pads.

When the housing is in the non-deformed state, the tilting pads may be arranged to define a first geometric preload. When the housing is in the deformed state, the tilting pads are arranged to define a second geometric preload, the second geometric preload being different from the first geometric preload.

In embodiments of the tilting pad bearing the housing is configured to be deformed from the non- deformed state to the deformed state by compressing the housing in the radial direction, and/or by compressing at least a portion of the housing in the circumferential direction. Thereby the radius and/or circumference of the housing can be reduced and then be suitable to be fit into a mounting hole with at least the corresponding radius/circumference.

The tilting pad bearing may comprise three or more tilting pads distributed at equidistant positions along the inner surface of the housing and/or arranged to extend in respective tilted positions relative to the inner surface of the housing.

In embodiments, the tilting pad bearing may be a self-acting fluid journal bearing, the self-acting fluid journal bearing preferably being configured to support the rotating journal within the journal opening. The self-acting fluid journal bearing may comprise:
a plurality of tilting pads circumferentially spaced around the journal opening, each said bearing pad comprising a leading edge and a trailing edge;
a deformable bearing housing around the bearing pads, whereby after installing, the deformable bearing housing is deformed in such a way that said bearing pads are displaced radially inwards and/or rotated with said trailing edge, towards the shaft;
and at least one pivoting element between each of the tilting pads and the deformable bearing housing to allow a pivoting motion of said bearing pads.

The fluid can be any suitable (combination of) liquid, like oil, and/or gas, like air.

When the housing is deformed from the non-deformed state to the deformed state, each of the tilting pads is displaced in a respective direction and over a respective distance. The displacement of a tilting pad comprises a first displacement component over a radial distance in a radially inward direction and a second displacement component over a tangential distance in a tangential direction. In embodiments of the present disclosure the ratio between the radial distance and tangential distance can be of any ratio, such as either of the ratio's 1:0, 1:1, or 0:1.

Displacement of the tilting pad in the tangential direction decreases the wear affected region of the tilting pad surface. Furthermore, such displacement shifts the wear affected region to the edge of the tilting pad (either trailing of leading), which are less critical to the performance of the bearing.

In embodiments of the tilting pad bearing wherein each tilting pad is connected to and/or integrally formed with a respective rigid part of the housing, a first and a second contact element may be provided at the circumferential outer surface of the rigid housing part to contact a wall of the mounting hole. Each contact element may be shaped so as to form a point or line contact with the wall of the mounting hole.

In embodiments of the tilting pad bearing at least one of the contact elements is provided as a contact stub integrally formed with the respective rigid part. In the same or in other embodiments the contact elements may be separate contact elements, for instance contact bars, wherein each contact element may be placed into one or more grooves provided in the outer surface of the housing and/or in the wall of mounting hole. These different types of contact elements have in common that they influence the space available inside the mounting hole and therefore the extent in which the housing of the tilting pad is deformed when the housing is inserted into the mounting hole. Separate contact elements, such as (replaceable) contact bars, may be particularly advantageous since their shape and size may be selected after manufacturing the tilting pad bearing, allowing for this embodiment to be applied to an even wider range of applications.

In a more particular embodiment, the respective rigid part may be provided with three or more contact grooves and wherein the two contact bars can be arranged in either combination of two of the three or more contact grooves. In this case, not just the shape and size, but also the location of the contact element may be chosen after manufacturing. Arranging either of the contact bar in different combinations of contact grooves results in that a different deformation of the housing is maintained once the bearing is arranged in the mounting hole. Therefore, allowing for this embodiment to be applied to an even wider range of applications.

The contact elements may help to more accurately define the locations at which the bearing will come into contact with the wall of the mounting hole. For instance, the contact elements may either protrude equally far from the central axis, or one contact element may protrude further from the central axis than the other. The manner in which these two contact elements protrude from the central axis will affect the manner in which the housing is deformed when the bearing is arranged in the mounting hole.

In embodiments of the tilting pad bearing the ratio between the above-identified radial and tangential distance depends on the shape, size and position of the first and the second contact elements on the rigid portion, and optionally depends on a difference in size of the first and the second contact elements.

According to another aspect of the present disclosure an assembly is provided comprising a construction element including at least one mounting hole and a tilting pad bearing as defined herein, the tilting bearing being configured to become deformed when it is press-fitted into the mounting hole.

According to another aspect of the present disclosure, a method for providing a tilting pad bearing having a journal opening with a desired cross-section is provided. The method comprising providing a construction element, and providing a tilting pad bearing configured to be arranged into a mounting hole in a construction element, the tilting pad bearing comprisinga deformable housing having a central cavity, a number of tilting pads pivotably connected to and/or integrally formed with the housing and arranged inside the central cavity, the tilting pads defining a journal opening for insertion of a journal of a rotatable external shaft, wherein the housing is deformable from a non-deformed state, in which the journal opening has a first cross-section, to a deformed state in which the journal opening has a second, different cross-section, and preferably a tilting pad as defined in this disclosure. The method further comprises determining an extent to which the housing is to be deformed such that the journal opening has the desired cross-section, providing a mounting hole in the construction element, wherein the mounting hole is of a shape and/or size that, when the tilting pad bearing is deformed to the determined extend, the mounting hole will fit the tilting pad bearing and will maintain the deformation when the tilting pad bearing is arranged in the mounting hole, deforming the housing to the determined extend, maintaining the deformation by arranging the tilting pad bearing in the mounting hole.

In other words, rather than manufacturing numerous tilting bearings with differently sized journal openings and pads tilted to various angles to be able to achieve different bearing characteristics, the method makes it possible to use a standardized tilting pad bearing. Depending on the bearing properties that are desired for a particular application, a proper size and/or shape of the mounting hole and/or optionally a proper size, shape and/or location of a number of contact elements, and/or a proper size of the journal are, can be determined. The decision which cross-section the tilting pad bearing should have, is shifted from when the moment the bearing is provided (e.g. manufactured) to when the mounting hole is provided (e.g. manufactured). Being able to use a more or less uniform design to produce tilting pad bearings for a wide range of applications means the new tilting pad bearing as defined herein is becoming more of an off-the-shelf product.

Further advantages, features and details of the present disclosure will de elucidated on the basis of the following descriptions of several embodiments thereof. Reference is made in the description to the figures, in which:
figures 1A to 1D show various arrangements of a tilting pad bearings according to the present invention;
figures 2A-2C show various directions in which tilting pads may be displaced;
figure 3 shows a front view of a schematic representation of an embodiment of a tilting pad bearing according to the disclosure;
figure 4 shows the tilting pad bearing of figure 3, when press-fitted in a mounting hole;
figure 5 shows part of another embodiment of the tilting pad bearing, arranged inside a mounting hole;
figures 6A and 6B both show the same part of another embodiment, arranged inside a mounting hole in different configurations;
figure 7A shows placement of a pivoting element between a bearing housing and a tilting pad, and with respect to the pads leading and trailing edge, according to a first example, while figure 7B shows the positioning of a pivoting element in a further exemplary embodiment.
figure 8 shows an isometric view of an embodiment of a tilting pad bearing according to the disclosure.
figure 9Ashows a front view of a schematic representation of a further embodiment of a tilting pad bearing according to the disclosure, in which a tilting pad is connected to the housing of the bearing via both a pivoting element and a compliant structure; and
figure 9B shows a detail of the view of figure 9A, showing the displacement of the tilting pad made possible by the presence of a compliant structure next to the pivoting element of the tilting pad.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements or use of a "negative" limitation.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the disclosure described herein can operate in other orientations than described or illustrated herein.

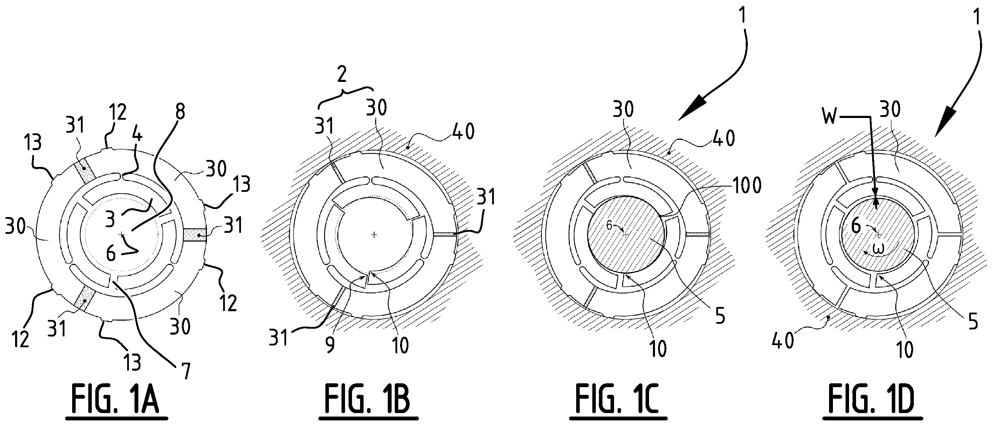

Figures 1A to 1D show cross-sections of a portion of a tilting pad bearing 1 according to various arrangements of the present disclosure. In principle, these figures only show cross-sections of a tilting pad bearing. However, the cross-sections are in fact representative for the tilting pad bearing as a whole because tilting pad bearings tend to have an essentially constant cross-section along their entire length, or at least a shape wherein the variations of the cross section over the length of the bearing may be minimal and, if any, have only an insubstantial effect on the properties of the bearing.

More in particular, figure 1A shows a bearing 1 in an uncompressed form with a round journal opening 8. Figure 1B shows a bearing after installation into a mounting hole, but without a shaft installed. Figure 1C shows a similar situation to figure 1B, but now with a shaft. The situation shown occurs when the shaft is not rotating. The shaft makes contact with the tilting pads. Figure 1D shows a situation similar to that of figures 1B and 1C, but now while the shaft is rotating.

Figure 1A shows a tilting pad bearing 1 in a first, non-deformed state. More specifically, this figure shows three tilting-pads 3 arranged in the central cavity 7 defined by the bearing housing 2 and distributed over the inner surface of this bearing housing 2 that surrounds the tilting pads. The plurality of tilting pads 3 (in this embodiment there are three, but other amounts are also possible) is connected to the housing 2 by pivoting elements 4, wherein each pivoting element 4 is flexible enough to allow the tilting pad connected thereto to pivot slightly relative to the inner surface of the bearing housing 2. In this embodiment, the housing is deformable as it comprises a number of rigid parts 30 that are interconnected to adjacent rigid parts through flexible parts 31. Each rigid part is also provided with two contact stubs 12, 13. The inner volume defined by the three tilting pads 3 forms a generally cylindrical inner bore or journal opening 8. In the journal opening a rotatable shaft 5 can be arranged (also see fig. 1C and 1D).

From the general tilting pad bearing shown in figure 1A, it can be seen that the three tilting pads are arranged to provide, when seen in this cross-section, a substantially circular journal opening, the journal opening having an oversize to allow the external shaft 5 to be arranged through and/or in the journal opening. Consecutive tilting pads are not arranged to contact each other; there is always an interspace between a leading edge 9 of one tilting pad 3 and a trailing edge 10 of another tilting pads 3. This interspace is needed to allow the tilting pads to be freely pivotable (tiltable) relative to each other, as will be explained later.

Figure 1B shows the tilting pad of figure 1A in a deformed state. More specifically, what is shown here is how deforming the housing, and then arranging the tilting pad bearing in a mounting hole of a construction element 40 will ensure that the deformation is maintained.

The journal opening 8 is deformed to define a cross-section corresponding to the extent to which the housing is deformed.

Figure 1C shows the construction element 40 and the tilting pad bearing 1 as shown in figure 1B. More specifically, what is shown here is the state in which a non-rotating shaft 5 is arranged in the journal opening of the tilting pad bearing. Now that the shaft has been inserted, it can be seen that the tilting pads 3 are pushed radially outwards to make sufficient room for the journal. However, it is also possible that the journal can be arranged in the journal opening 8 without having to displace the tilting pads 3.

When shaft 5 starts rotating - i.e. when it is not yet rotating at nominal speed, the fluid film is only partly pressurized and provide insufficient lift to completely separate the journal and bearing surfaces. Consequently, the shaft starts to bounce within the bearing in an uncontrolled manner which cause wear on the entire tilting pad surfaces. This can lead to scratches and a shape change of the bearing surface, which eventually lead to a loss of performance. However, the figure shows how pre-tilt can be used to limit which parts of the tilting pad will come into contact with the shaft 5 and thus eliminate the performance loss by restring the wear to only a pre-defined, and non-critical, area 100.

Figure 1D shows the construction element 40, the tilting pad bearing 1, and shaft 5 as shown in figure 1C. More specifically, what is shown here is the interaction between the shaft and the tilting pads when the shaft rotates at full speed. Because of the pressured fluid between tilting pads 3 and shaft 5, the tilting pads move further outwards in comparison to the case when the journal does not spin. Figure 1D shows the situation at nominal operation speed wherein the rotating shaft 5 is "floating" as it were on the fluid (gas or liquid) in the space between the inner surface of the tilting pads 3 and the outer surface of the external shaft 5 and there is no direct contact anymore between the external shaft 5 and the tilting pads 3.

In tilting pad bearings known in the art, all pivoting elements allowing the respective tilting pads to pivot or rotate relative to the housing 2 are arranged at respective fixed positions. In other examples of tilting pad bearings (i.e. in flexible tilting pad bearings) one or more pads are mounted on a radial compliant structure providing radial flexibility in the one or more pads. This structure allows the pad to move radial outwards in case the shaft diameter increases due to thermal or centrifugal expansion. However, a disadvantage of adding radial flexibility into the positions of the pivoting elements is that there is now no hard limit on the amount that the shaft can push the pads away. Therefore, if the radial or whirl forces are large enough, the shaft centre will also have a large radial displacement with no hard limit. This means that there is no guarantee that the shaft stays within a certain position envelope. Such a position envelope or restricted positional range requiring that the shaft position stays within certain limits, is often needed for a proper operation of the system. One can integrate hard stops into the design of the tilting pad bearing. However, this appears to be realistic only for large bearing sizes. On a small-scale, such end-stops would have to be extremely precisely placed or machined (in the order of 10µm) which is impractical, costly and decreases the reliability of the bearing.

In some examples of tilting pad bearings, the tilting pads can tilt essentially freely around their pivoting elements. In practice this means that when the rotatable shaft is not rotating, the tilting pads have the tendency to tilt to a preferred position under the influence of gravity. In other examples of tilting pad bearings, the pads are biased to a preferred position under the influence of a preloading torsion spring or an equivalent element (for instance a flexible pivoting element urging the tilting pad into the preferred position, irrespective of the direction of the force of gravity). This pivoted position is herein also referred to as the pre-load, or pre-tilt position. In the pivoted position the tilting pad extends slightly towards the centre axis of the bearing. In the shown example each of the tilting pads 3 has been tilted along the pivoting element 4 in a clockwise direction. In figure 1C it can be seen that at the appropriate tilt angle, each of the tilting pads (instead of the lowermost tilting pad only) contacts the external shaft 5 at its trailing edge 10. When the external shaft 5 starts to rotate, wear is caused by the rotating shaft 5 on the trailing edges 10 of each of the tilting pads 3 only. In other words, instead of wear in a large and undefined area, wear occurs in the less critical trailing edges 10 of all tilting pads 3 (less critical for the bearing performance that is). In figure 1D the external shaft 5 rotates with a speed that is sufficiently high to ensure that the shaft 5 again "floats" on the medium (i.e. the fluid) inside the space between the inner surface of the tilting pads 3 and the outer surface of the external shaft 5. The skilled person is aware that an equilibrium situation ultimately achieved at nominal operation speed may be the same for pre-tilted or non-pre-tilted tilting pad bearings.

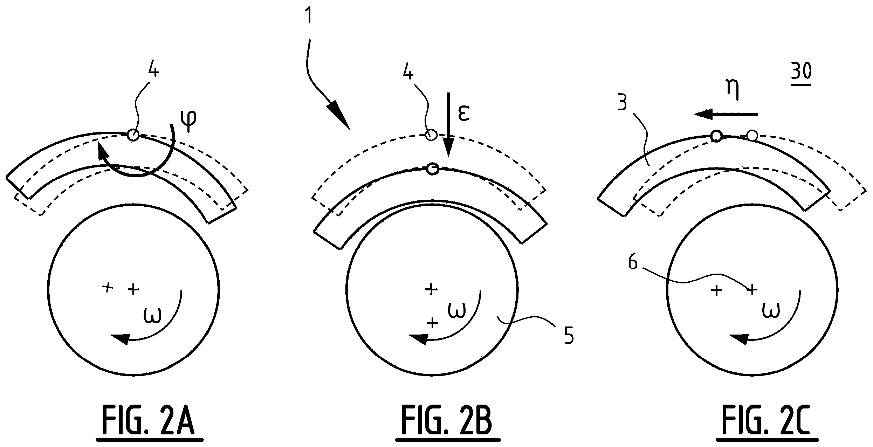

Figures 2A-2C are provided to show various transformation components of a tilting pad relative to the bearing central axis, which in this image coincides with the axis 6 of shaft 5. Pads can for instance be displaced by a certain distance in a radial direction forming the radial displacement component (cf. figure 2B) and a distance in a tangential direction forming the tangential displacement component (cf. figure 2C) and/or may be pivoted/rotated/tilted (cf. figure 2A). The figures show a tilting pad 3 that may be pivoted at a pivoting element 4 relative to a central axis of the bearing. The central axis of the bearing is denoted by a '+' symbol and the centre of the curve defined by the surface of tilting pad 3 facing towards the bearing centre is denoted by another '+' symbol.

Figure 2A shows how tilting pad 3 may rotate, or tilt around pivoting element 4, figure 2B shows how tilting pad 3 may be displaced centrally inward, together with pivoting element 4, and figure 2C shows how the combination of tilting pad 3 and pivoting point 4 may be displaced tangentially. In fact, any displacement of a tilting pad 3 can be parametrized as a combination of these types of displacement. More in particular, considering the distances over which these displacements are commonly relevant, such as in the order of magnitude of 0.01 mm, the rotational displacement and the tangent displacement may be considered to effectively have the same effect on the centre of the curved surface of the tilting pad 3. Therefore, it may even be said that any displacement can be parametrized as a combination of just the centrally inward displacement and the tangent displacement. Each displacement over a certain distance is also a displacement over a first partial distance in the centrally inward direction and a displacement over a second partial distance in the tangent direction. Therefore, alternatively, the direction in which the tilting pad is displaced can be described by a ratio between these partial distances. Additionally, when one pre-tilt is described as 'larger' than another pre-tilt, this may mean that these pre-tilts have the same or very similar ratio between radial displacement distance and tangent displacement distance, and wherein the larger pre-tilt may be understood as one for which the tilting pads were displaced further - i.e. over a longer total distance.

Similarly, a particular cross-section of a journal opening 8 can also be parametrized by the displacements of each of the tilting pads 3, which in themselves again can be parametrized as explained above. It should therefore be understood that when throughout the present disclosure reference is made to a particular bore geometry this also refers to a particular pre-tilt/positioning which is applied to tilting pads 3 and define the cross-section. Alternative wording referring to the same concept are geometric preload and pivot point displacement.

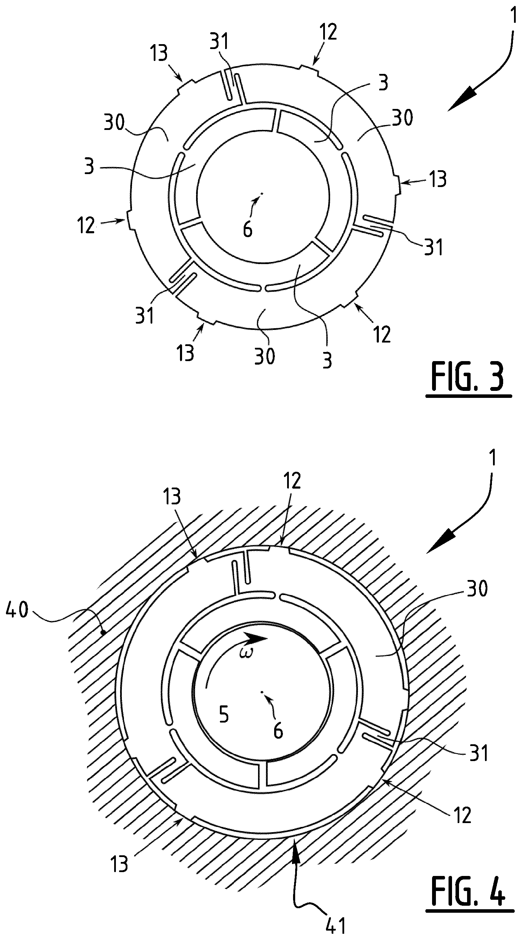

Figure 3 shows the front view of a schematic representation of an embodiment of a tilting pad bearing 1 according to the disclosure, and figure 4 shows said tilting pad bearing 1 press-fitted in a mounting hole.

In particular, figure 3 shows the deformable housing 2 of the press-fit bearing 1 in a non-deformed state. Tilting pads 3 are attached through pivoting elements 4 to said housing. In this particular embodiment, in this non-deformed state, the tilting pads define a bore geometry having a circular cross-section, the centre of which is indicated as axis 6.

The deformable housing 2 comprises rigid parts 30 and compressible parts 31, which follow each other alternately. Therefore, this embodiment and ones similar to it have identical numbers of rigid parts and compressible parts. There are alternative embodiments wherein the number of rigid parts is larger than the number of tilting pads, in which case not each rigid part would have a tilting pad connected to it through a pivoting element. Furthermore, embodiments are conceivable in which the deformable housing is manufactured of a more or less uniform compressible material and comprises one or more parts of said material which can be compressed as a whole.

Each rigid part 30 is provided with a first contact element and a second contact element which in this particular embodiment take the form of a first contact stub 12 and second contact stub 13 which are of equal size and shape.

Such contact elements help to define the points at which the tilting pad bearing will be in contact with an inner surface of a construction element 40 with more precision. Moreover, displacement of rigid part 30 is determined based on placement and size of said contact elements. Having first and second contact elements of different sizes will also change the direction in which rigid part 30 is displaced.

Furthermore, figure 4 shows the deformable housing 2 in a deformed state, as the mounting hole 41 provided in a construction element 40 is configured to maintain the deformed state that the tilting pad bearing had to have been deformed to, before it could have been arranged inside said mounting hole. Additionally, a shaft inserted into journal opening is shown.

After press-fitting the tilting pad bearing 1 into a mounting hole, precisely machined in construction element 40, the contact stubs will make contact with the inner surface of construction element 40, and subsequently maintain the deformation which the bearing housing was deformed to, such that the desirable amount of pivot point offset is achieved. After installation, the geometry between shaft 5 and a tilting pad 3 is such that the gap is larger at the leading edge then its trailing edge. A first function of the press-fitting is that a deformation of the bearing housing is maintained, to consequently provide the journal opening with a desired cross-section, and a tilting pad bearing with the required gap or bore geometry. A second is that the bearing is held in position, hence connecting elements are not required which is especially beneficial for small-scale bearings where there is no room to create or drill separate mounting holes.

In the case that the contact elements 12, 13 do not protrude equally far from the central axis, the manner in which the housing will be deformed when arranged in a particular mounting hole is further defined by the angular distance between the contact elements.

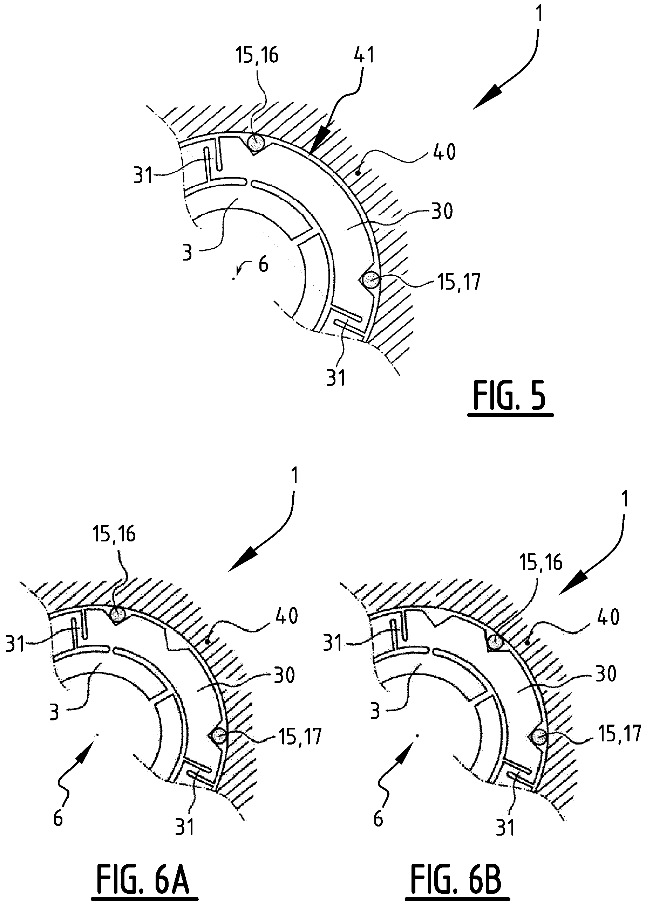

Figure 5 shows part of another embodiment, arranged inside a mounting hole. In particular this figure shows an alternative form that the contact elements may have. In this embodiment, the rigid parts have two contact grooves 15 and separate contact bars are provided. In this particular embodiment, a first contact bar 16 and a second contact bar 17 are provided which are of equal size and shape. It is also possible to press-fit a tilting pad bearing according to the present disclosure into a mounting hole while using two contact bars which are of different shape and/or size, which will affect the deformation of the tilting pad bearing differently and therefore provide a bearing with different bearing properties.

Having these separate contact bars allows for making the final decision on what cross-section is desired during installation and considering that the contact bars may be exchanged with contact bars of other shapes and sizes, this allows for the cross-section to be altered even after initial installation or use.

Figures 6A and 6B both show the same part of another embodiment, arranged inside a mounting hole in different configurations. In particular this figure shows another alternative form that the contact elements may have. In this embodiment, the rigid parts have three contact grooves 15 and embodiments are possible which have even more. Two contact bars are provided, similar to the one shown in figure 5. Other contact bars are possible, as is discussed in relation to figure 5. Displacement of rigid part 30 changes depending on the placement chosen for these contact bars, effectively changing the cross-section of the journal opening. Similar to the design choices provided by the contact bars themselves, as discussed in relation to figure 5, having these multiple grooves also allow for making the final decision on what cross-section is desired during installation, and considering that one or both of the contact bars may be moved between the three or more contact grooves, this also allows for the cross-section to be altered even after initial installation or use.

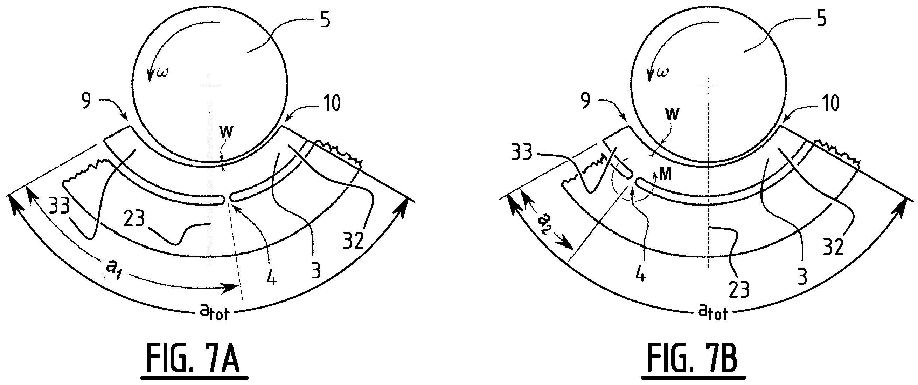

Figures 7A and 7B illustrate the principle of pivot point/element shifting to improve the tilting pad bearing, its properties, and its capability to accommodate larger journal growth.

Figure 7A shows (the conventional) placement of a pivoting element 4 in the trailing portion 32 of a tilting pad bearing (wherein the leading portion 33 of a tilting pad 3 may be defined as the front half of the tilting pad 3 while the trailing portion 32 is defined as the half of the tilting pad 3 behind the leading portion 33, seen in the direction of rotation). In other words, the pivoting element 4 is located at a position beyond the pad centreline 23 (when observed along the journal rotation direction ω). This means that pivoting point/element 4 is placed more towards the pad trailing edge 10 then to its leading edge 9. A disadvantage of this placement may be a relatively small bearing gap size (W) beneath the pivoting point/element 4. Expansion of the journal diameter due to thermal or centrifugal effects can consume this gap and cause shaft seizure with destructive consequence.

Figure 7B illustrates an embodiment wherein pivoting point/element 4 is positioned more towards leading edge 9 and is actually located in the leading portion 33 of the tilting pad 3. In other words, referring to figures 7A and 7B, angle a₂ is smaller than angle a₁. More specifically, when aₜₒₜ is the total angle defined between the leading edge 9 and the trailing edge 10 of the tilting pad 3 (relative to the rotational direction) and angle a₂ is defined as the angle between the position of the leading edge 9 of the tilting pad 3 and the position of the pivoting element 4, then the (a₂/aₜₒₜ) < 0,5 or, preferably, (a₂/aₜₒₜ) < 0,3.

This positioning of the pivoting element 4 increases the bearing gap size (W) without changing the film geometry (of the fluid inside the bearing) and thus the bearing properties. The shift in pivoting position must be compensated with a tilt moment (M). Such moment or torque can be realized with a mechanical element, such as a spring or, in case of a monolithic design, the pivoting element 4 itself can be configured to act as a torque spring, and thus applying the required tilt-preload. The tilting pad may be given a pre-tilt by deforming the flexible bearing housing 2, inserting shaft 5 which will then push trailing edge 10 outwards such that the pivoting element 4 is elastically deformed, as a flexure, to the extent that a sufficient tilt moment (M) is realized.

The skilled person will appreciate that this particular placement of pivoting element 4 may also be included in a tilting pad bearing 1 as defined herein. Such tilting pad bearing 1 comprises a housing2 and a number of tilting pads 3. The housing has a central cavity 7. The tilting pads 3 are pivotably connected to and/or integrally formed with the housing 2 and are arranged inside the central cavity 7. The tilting pads 3 defining a journal opening 8 for insertion of a journal of a rotatable external shaft 5. Each tilting pad 3 defines a leading portion 33 and a trailing portion 32 relative to an intended rotation direction of the external shaft and/or the journal and a pivoting element is arranged in the leading portion of the tilting pad. The pivoting element 4 is arranged so as to urge the associated pad into a tilted orientation. Alternatively or additionally, the bearing gap between the leading edge 9 in the leading portion 33 of the tilting pad is larger than the bearing gap between the trailing edge 10 in the trailing portion 32 of the tilting pad 3.

For these tilting pads according to those embodiments, it is preferred but not essential that the tilting pad bearing that is configured to be arranged into a mounting hole in a construction element, has a housing that is a deformable housing from a non-deformed state, in which the journal opening has a first cross-section, to a deformed state in which the journal opening has a second, different cross-section.

In this embodiment, the bearing can be provided with a rigidly mounted pivoting element, while also having, during operation, a larger bearing gap (W) between the journal and a point on the inner surface of the tilting pad that is opposite of the point around which the tilting pad pivots. This embodiment both provides an overall more rigid bearing, as well as a bearing that can accommodate larger journal growth.

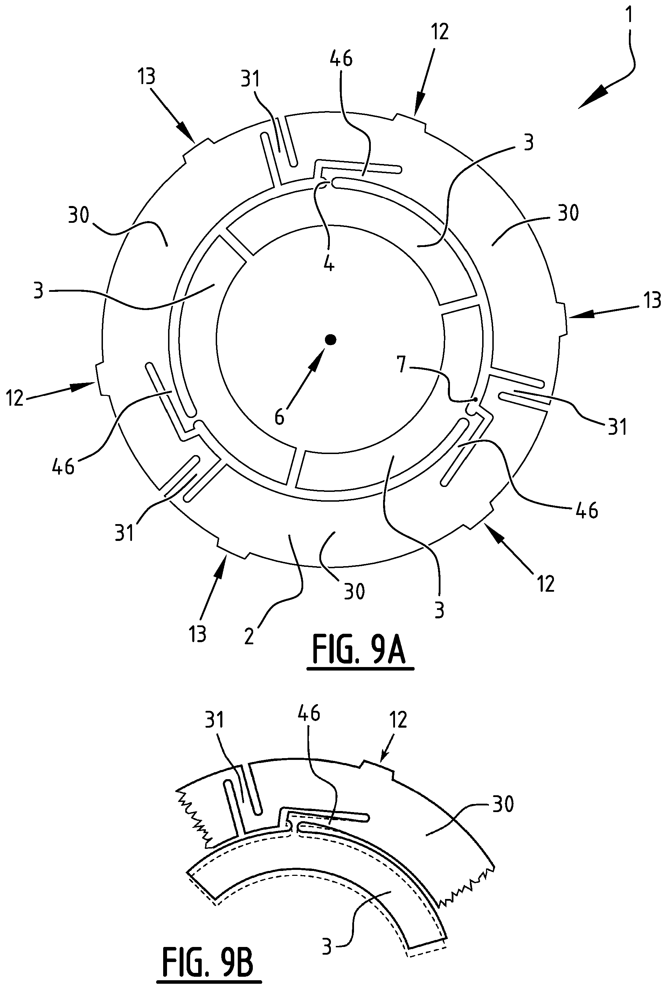

Alternatively or additionally, the possibility to accommodate larger journal growth can be accomplished by providing a compliant structure(s) between the pivoting element 4 and the rigid element 30 of the housing and/or between the tilting pad 3 and the pivoting element 4, as will be further explained in connection with figures 9A and 9B.

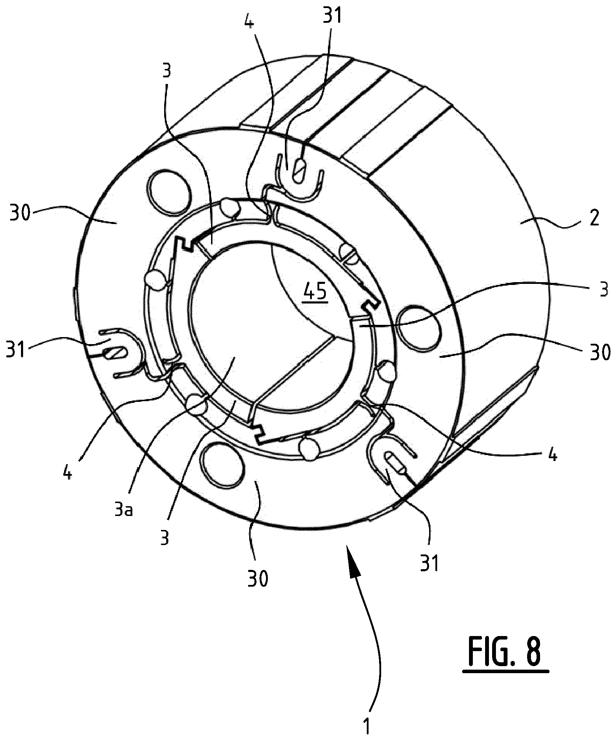

Figure 8 shows an isometric view of a further embodiment of a tilting pad bearing according to the disclosure. This embodiment of the tilting pad bearing is for example configured for supporting a rotating shaft and comprises a plurality of bearing pads (or tilting pads 3) circumferentially spaced around the shaft; a deformable bearing housing 2 (or deformable housing) encircling the bearing pads; and at least one pivoting element (herein also referred to as pivot point) between each of the bearing pads and the deformable bearing housing. More in particular, this embodiment of the tilting pad bearing is configured for supporting a rotating shaft, and comprises a plurality of bearing pads circumferentially spaced around the shaft, each said bearing pad comprising a leading edge and a trailing edge; a deformable bearing housing encircling the bearing pads, whereby after installing, the deformable bearing housing is deformed in such a way that said bearing pads are displaced radial inwards, and/or rotated with said trailing edge, towards the shaft (or centre of journal opening 45); and at least one pivoting element between each of the bearing pads and the deformable bearing housing to allow a pivoting motion of said bearing pads.

In particular, such an embodiment is a single monolithic part and the pivoting elements are of the elastic hinge type. Additionally, the deformable bearing housing shown is composed of a plurality of rigid segments 30 connected together with flexible elements 31.

The tilting pad 3 according to embodiments of the present disclosure has a flexible bearing housing 2 such that the radial and geometric tilt offset depends on the diametrical size of the bore/hole where the bearing is mounted into. This allows fabricating a single bearing which can be press-fit into a hole whereafter the geometric preload and, as a consequence, its properties can be set. Another diametrical size of the press-fit hole will result in other bearing properties. Therefore, a single bearing geometry can be used for different applications.

Figure 9Aand 9B show a front view of a schematic representation of another embodiment of a tilting pad bearing1 according to the disclosure. In some embodiments, like the one shown in figure 9A, the plurality of tilting pads 3are connected to the rigid parts 30 of the housing 2 via a combination of a pivoting element 4 and a compliant structure46. Compliant structure46 may also be referred to as a flex structure or bending structure. The compliant structure may be configured to provide a specific compliance to the connection between each of the pads 3 and the housing 2 of the bearing 1.

This creates in essence a compliant tilting pad bearing which is capable of accommodating a relatively large journal growth. In case a journal/shaft arranged in the journal opening expands diametrically, for example due to thermal or centrifugal effects, the bearing gap (W) between the journal/shaft and tilting pads 3 may decrease. This results in an increase in pressure in the bearing gap, which in turn may move (i.e. compress, contract, and/or bend) the compliant structure 46. When the compliant structure 46 moves, tilting pad 3 may be displaced radially outwards and/or tangentially as shown in figure 9B.

Although compliant structures 46 are present at the connection points of each of the tilting pads in the embodiment of figure 9, it is also possible - in other embodiments - to provide only a few of the tilting pads with a compliant structure (i.e. only a subset of the set of tilting pads). For instance, only one of the tilting pads may have been provided with a compliant structure.

In some embodiments, like the one shown in figures 9A and 9B, tilting pads 3 are directly connected to pivoting element 4, which in turn is directly connected to compliant structure46, which in turn is directly connected to the housing 2, more specifically, to a rigid part 30 thereof. The order in which pivoting element 4 and compliant structure46 may form the connection between tilting pad 3 and the housing may also be reversed. Embodiments are also conceivable in which tilting pads 3 are directly connected to compliant structure46, which in turn is directly connected to pivoting element 4, which in turn is directly connected to the housing, or, more specifically, to a rigid part 30 of the housing.

Providing a tilting pad bearing with both a deformable housing and one or more compliant structures 46has at least the following synergistic effects.

When the tilting pad bearing is deformed farther than intended and/or arranged in a mounting hole smaller than intended, thereby maintaining this over-deformation, it may occur that tilting pads 3 are arranged too far radially inward. Compliant structures 46 may compensate for such an over-deformation by providing the aforementioned radially outward displacement of tilting pad 3. This makes the bearing more robust against manufacturing errors.

## Claims

1. Tilting pad bearing (1) configured to be arranged into a mounting hole in a construction element, the tilting pad bearing comprising:
a deformable housing (2) having a central cavity (7);
a number of tilting pads (3) pivotably connected to and/or integrally formed with the housing (2) and arranged inside the central cavity (7), the tilting pads defining a journal opening (8) for insertion of a journal of a rotatable external shaft (5);
wherein the housing (2) is deformable from a non-deformed state, in which the journal opening (8) has a first cross-section, to a deformed state in which the journal opening has a second, different cross-section;
**characterized in that** the housing (2) is deformable as it comprises one or more rigid parts (30) and one or more flexible housing parts (31), wherein the rigid parts (30) are interconnected to adjacent rigid parts through the flexible parts (31), and wherein each tilting pad (3) being pivotably connected to and/or integrally formed with a respective rigid part (30) of the housing (2).

2. Tilting pad bearing (1) according to claim 1, wherein a first contact element (12) and a second contact element (13) are provided at the circumferential outer surface of the rigid housing part (30), wherein each of the first and second contact elements (12, 13) define a contact point on the respective rigid part (30).

3. Tilting pad bearing (1), according to claim 1 or 2, wherein each tilting pad (3) has a leading portion (33) and a trailing portion (32) relative to an intended rotational direction of the external shaft and/or the journal and wherein the pivoting element (4) is arranged in the leading portion (33) of the tilting pad (3), wherein the pivoting element is furthermore optionally arranged so as to urge the associated pad into a tilted orientation and/or wherein the bearing gap between the leading edge (9) in the leading portion (33) of the tilting pad is optionally larger than the bearing gap between the trailing edge (10) in the trailing portion (32) of the tilting pad (3).

4. Tilting pad bearing according to claim 2 or claim 3 when dependent on claim 2, wherein, when the housing (2) is deformed from the non-deformed state to the deformed state, each of the tilting pads is displaced in a respective direction and over a respective distance, the displacement comprising a radial component and a tangential component and wherein the ratio between the radial distance and tangential distance depends on the location, shape and size of the first and the second contact elements (12, 13), and optionally depends on a difference in size of the first and the second contact elements.

5. Tilting pad bearing according to any of the claims 2, 4 or claim 3 when dependent on claim 2, wherein each contact element (12, 13) is shaped so as to form a point or line contact with the wall of the mounting hole.

6. Tilting pad bearing according to any of the claims 2, 4, 5 or claim 3 when dependent on claim 2, wherein at least one of the contact elements (12, 13) is provided as a contact stub integrally formed with the respective rigid part and/or wherein at least one of the contact elements (12, 13) is a contact bar, wherein each contact bar is arranged in a contact groove, formed in the outer surface of the associated rigid housing part, optionally comprising three or more contact grooves and wherein the two contact bars can be arranged in either combination of two of the three or more contact grooves.

7. Tilting pad bearing as claimed in any of the preceding claims, wherein the housing (2) is at least one of:
- deformed from the non-deformed state to the deformed state when the housing is press-fitted into a mounting hole;
- configured to change the size of the second cross-sectional area by adapting the extent to which the housing is deformed and/or configured to be deformed to a first extent to provide a first size of the second cross-sectional area or to be deformed to a second extent to provide a second size of the second cross-sectional area;
- configured to be deformed from the non- deformed state to the deformed state by compressing the housing in the radial direction, and/or by compressing at least a portion of the housing in the circumferential direction.

8. Tilting pad bearing as claimed in any of the preceding claims, wherein the tilting pads are at least one of:
- tilt-preloaded;
- arranged to define a first geometric preload when the housing is in the non-deformed state, and arranged to define a second geometric preload, the second geometric preload being different from the first geometric preload, when the housing is in the deformed state.

9. Tilting pad bearing as claimed in any of the preceding claims, wherein each tilting pad is connected to or integrally formed with the housing via a pivoting element (4), the pivoting element preferably being made of flexible material and/or the pivoting element preferably being configured to urge the associated tilting pad into a tilted position relative to a central axis of the housing.

10. Tilting pad bearing as claimed in any of the preceding claims,
wherein the first cross-section is circular, and the second cross-section is non-circular and/or wherein in the non-deformed and deformed states the journal opening has respectively a first and second cross-sectional area, wherein the second cross-sectional area is smaller than the first cross-sectional area,
wherein the housing is optionally configured to have in the deformed, operational state a cross-sectional area that is 0.01%-5% smaller, or 0.1%-2% smaller, or, preferably 0,1%-1,0% smaller, than in the non-deformed state.

11. Tilting pad bearing as claimed in any of the preceding claims, wherein the tilting pad bearing is a self-acting fluid journal bearing, the self-acting fluid journal bearing preferably being configured for supporting the journal of the rotatable external shaft arranged in the journal opening and/or where the self-acting fluid journal bearing comprises:
a plurality of bearing pads circumferentially spaced around the journal opening, each said bearing pad comprising a leading edge and a trailing edge;
a deformable bearing housing encircling the bearing pads, whereby after installing, the deformable bearing housing is deformed in such a way that said bearing pads are displaced radially inwards and/or rotated with said trailing edge, towards the shaft;
and at least one pivoting element between each of the bearing pads and the deformable bearing housing to allow a pivoting motion of said bearing pads.

12. Tilting pad bearing according to any of the previous claims, wherein, when the housing is deformed from the non-deformed state to the deformed state, each of the tilting pads is displaced in a respective direction and over a respective distance, the displacement comprising a radial component, by which the tilting pad displaces radially inward over a radial distance, and/or a tangential component, by which the tilting pad displaces clockwise, or counter-clockwise in relation to a central axis over a tangential distance, wherein preferably the ratio between the radial distance and tangential distance is in the range of 1:0, 1:1, or 0:1.

13. Tilting pad bearing according to any of the preceding claims, wherein one or more tilting pads from the number of tilting pads (3) is connected to and/or integrally formed with the housing via a compliant structure (46), the compliant structure (46) preferably being made of a flexible material and/or wherein the compliant structure is preferably configured to, when bended with respect to the housing (2), displace the respective tilting pad in radial and/or tangentially direction.

14. Assembly of a construction element including at least one mounting hole and a tilting pad bearing as claimed in any of the preceding claims, the tilting bearing being configured to become deformed when it is press-fitted into the mounting hole.

15. Method for providing a tilting pad bearing (1) as claimed in any of the claims 1-13, the tilting pad bearing (1) having a journal opening (8) with a desired cross-section, the method comprising:
providing a construction element;
providing a tilting pad bearing (1) configured to be arranged into a mounting hole in a construction element, the tilting pad bearing comprising a deformable housing (2) having a central cavity (7), a number of tilting pads (3) pivotably connected to and/or integrally formed with the housing and arranged inside the central cavity, the tilting pads defining a journal opening for insertion of a journal of a rotatable external shaft (5), wherein the housing is deformable from a non-deformed state, in which the journal opening has a first cross-section, for instance a circular cross-section, to a deformed state in which the journal opening has a second, different cross-section;
determining an extent to which the housing (2) is to be deformed such that the journal opening has the desired cross-section;
providing a mounting hole in the construction element,
wherein the mounting hole is of a shape and/or size that, when the tilting pad bearing is deformed to the determined extend, the mounting hole will fit the tilting pad bearing and will maintain the deformation when the tilting pad bearing is arranged in the mounting hole;
deforming the housing to the determined extend;
maintaining the deformation by arranging the tilting pad bearing in the mounting hole.

## Patentansprüche

1. Kippsegmentlager (1) zur Anordnung in einer Montagebohrung eines Bauelements, welches Kippsegmentlager umfasst:
ein verformbares Gehäuse (2) mit einem zentralen Hohlraum (7);
eine Anzahl von Kippsegmenten (3), die schwenkbar mit dem Gehäuse (2) verbunden und/oder integral mit diesem ausgebildet sind und im zentralen Hohlraum (7) angeordnet sind, wobei die Kippsegmente eine Zapfenöffnung (8) zum Einsetzen eines Zapfens einer drehbaren Außenwelle (5) bilden;
wobei das Gehäuse (2) von einem unverformten Zustand, in dem die Zapfenöffnung (8) einen ersten Querschnitt aufweist, in einen verformten Zustand verformbar ist, in dem die Zapfenöffnung einen zweiten, anderen Querschnitt aufweist;
**dadurch gekennzeichnet, dass** das Gehäuse (2) verformbar ist, da es aus einem oder mehreren starren Teilen (30) und einem oder mehreren flexiblen Gehäuseteilen (31) besteht, wobei die starren Teile (30) über die flexiblen Teile (31) mit benachbarten starren Teilen verbunden sind, wobei jedes Kippsegment (3) schwenkbar mit einem jeweiligen starren Teil (30) des Gehäuses (2) verbunden ist und/oder integral mit diesem ausgebildet ist.

2. Kippsegmentlager (1) nach Anspruch 1, wobei an der Umfangsaußenfläche des starren Gehäuseteils (30) ein erstes Kontaktelement (12) und ein zweites Kontaktelement (13) vorgesehen sind, wobei jedes der ersten und zweiten Kontaktelemente (12, 13) einen Kontaktpunkt am jeweiligen starren Teil (30) bildet.

3. Kippsegmentlager (1) nach Anspruch 1 oder 2, wobei jedes Kippsegment (3) einen vorderen Abschnitt (33) und einen hinteren Abschnitt (32) relativ zu einer beabsichtigten Drehrichtung der Außenwelle und/oder des Zapfens aufweist und wobei das Schwenkelement (4) im vorderen Abschnitt (33) des Kippsegments (3) angeordnet ist, wobei das Schwenkelement zudem optional so angeordnet ist, dass es das zugehörige Segment in eine gekippte Ausrichtung drängt und/oder wobei der Lagerspalt zwischen der Vorderkante (9) im vorderen Abschnitt (33) des Kippsegments optional größer ist als der Lagerspalt zwischen der Hinterkante (10) im hinteren Abschnitt (32) des Kippsegments (3).

4. Kippsegmentlager nach Anspruch 2 oder Anspruch 3, sofern dieser von Anspruch 2 abhängig ist, wobei beim Verformen des Gehäuses (2) vom unverformten in den verformten Zustand jedes der Kippsegmente in eine jeweilige Richtung und über eine jeweilige Distanz verschoben wird, wobei die Verschiebung eine radiale und eine tangentiale Komponente umfasst und wobei das Verhältnis zwischen radialer und tangentialer Distanz von der Lage, Form und Größe des ersten und des zweiten Kontaktelements (12, 13) und optional von einem Größenunterschied zwischen dem ersten und dem zweiten Kontaktelement abhängt.

5. Kippsegmentlager nach einem der Ansprüche 2, 4 oder Anspruch 3, sofern dieser von Anspruch 2 abhängig ist, wobei jedes Kontaktelement (12, 13) so geformt ist, dass es einen Punkt- oder Linienkontakt mit der Wand der Montagebohrung bildet.

6. Kippsegmentlager nach einem der Ansprüche 2, 4, 5 oder Anspruch 3, sofern dieser von Anspruch 2 abhängig ist, wobei mindestens eines der Kontaktelemente (12, 13) als Kontaktstummel ausgebildet ist, der integral mit dem jeweiligen starren Teil ausgebildet ist, und/oder wobei mindestens eines der Kontaktelemente (12, 13) ein Kontaktsteg ist, wobei jeder Kontaktsteg in einer Kontaktnut angeordnet ist, die in der Außenfläche des zugehörigen starren Gehäuseteils ausgebildet ist und optional drei oder mehr Kontaktnuten umfassen kann, und wobei die beiden Kontaktstege in einer Kombination aus zwei der drei oder mehr Kontaktnuten angeordnet sein können.

7. Kippsegmentlager nach einem der vorhergehenden Ansprüche, wobei das Gehäuse (2) mindestens eines der folgenden Merkmale aufweist:
- verformt ist vom unverformten in den verformten Zustand wenn das Gehäuse in eine Montagebohrung eingepresst ist;
- so konfiguriert ist, dass die Größe des zweiten Querschnittsbereichs durch Anpassung des Verformungsgrads des Gehäuses verändert wird und/oder so konfiguriert ist, dass sie sich um ein erstes Maß verformt, um eine erste Größe des zweiten Querschnittsbereichs bereitzustellen, oder so konfiguriert ist, dass sie sich um ein zweites Maß verformt, um eine zweite Größe des zweiten Querschnittsbereichs bereitzustellen;
- so konfiguriert ist, dass sie sich vom unverformten Zustand in den verformten Zustand verformen lässt, indem das Gehäuse in radialer Richtung komprimiert wird und/oder indem zumindest ein Teil des Gehäuses in Umfangsrichtung komprimiert wird.

8. Kippsegmentlager nach einem der vorhergehenden Ansprüche, wobei die Kippsegmente mindestens eines der folgenden Merkmale aufweisen:
- kippvorgespannt;
- so angeordnet sind, dass sie im unverformten Zustand des Gehäuses eine erste geometrische Vorspannung definieren, und so angeordnet sind, dass sie im verformten Zustand des Gehäuses eine zweite geometrische Vorspannung definieren, wobei sich die zweite geometrische Vorspannung von der ersten geometrischen Vorspannung unterscheidet.

9. Kippsegmentlager nach einem der vorhergehenden Ansprüche, wobei jedes Kippsegment über ein Schwenkelement (4) mit dem Gehäuse verbunden oder integral damit ausgebildet ist, wobei das Schwenkelement vorzugsweise aus flexiblem Material besteht und/oder das Schwenkelement vorzugsweise so konfiguriert ist, dass es das zugehörige Kippsegment in eine geneigte Position relativ zu einer Mittelachse des Gehäuses drängt.

10. Kippsegmentlager nach einem der vorhergehenden Ansprüche,
wobei der erste Querschnitt kreisförmig und der zweite Querschnitt nicht kreisförmig ist und/oder wobei die Zapfenöffnung im unverformten und verformten Zustand jeweils eine erste und eine zweite Querschnittsfläche aufweist, wobei die zweite Querschnittsfläche kleiner ist als die erste Querschnittsfläche,
wobei das Gehäuse optional so konfiguriert ist, dass es im verformten Betriebszustand eine um 0,01 %-5 % kleinere, 0,1 %-2 % kleinere oder vorzugsweise 0,1 %-1,0 % kleinere Querschnittsfläche aufweist als im unverformten Zustand.

11. Kippsegmentlager nach einem der vorhergehenden Ansprüche, wobei das Kippsegmentlager ein selbstwirkendes Fluid-Gleitlager ist, das vorzugsweise zur Lagerung des Zapfens der drehbaren Außenwelle in der Zapfenöffnung ausgebildet ist und/oder Folgendes umfasst:
eine Vielzahl von Lagersegmenten, die in Umfangsrichtung um die Zapfenöffnung angeordnet sind, wobei jedes Lagersegment eine Vorder- und eine Hinterkante aufweist;
ein verformbares Lagergehäuse, das die Lagersegmente umgibt, wobei das verformbare Lagergehäuse nach dem Einbau so verformt wird, dass die Lagersegmente radial nach innen verschoben und/oder mit der Hinterkante in Richtung der Welle gedreht werden;
und mindestens ein Schwenkelement zwischen jedem der Lagersegmente und dem verformbaren Lagergehäuse, um eine Schwenkbewegung der Lagersegmente zu ermöglichen.

12. Kippsegmentlager nach einem der vorhergehenden Ansprüche, wobei beim Verformen des Gehäuses vom unverformten in den verformten Zustand jedes der Kippsegmente in eine jeweilige Richtung und über eine jeweilige Distanz verschoben wird. Die Verschiebung umfasst eine radiale Komponente, um die sich das Kippsegment über eine radiale Distanz radial nach innen verschiebt, und/oder eine tangentiale Komponente, um die sich das Kippsegment im Uhrzeigersinn oder gegen den Uhrzeigersinn in Bezug auf eine Mittelachse über eine tangentiale Distanz verschiebt. Vorzugsweise liegt das Verhältnis zwischen der radialen Distanz und der tangentialen Distanz im Bereich von 1:0, 1:1 oder 0:1.

13. Kippsegmentlager nach einem der vorhergehenden Ansprüche, wobei ein oder mehrere Kippsegmente (3) über eine nachgiebige Struktur (46) mit dem Gehäuse verbunden und/oder integral mit diesem ausgebildet sind. Die nachgiebige Struktur (46) besteht vorzugsweise aus einem flexiblen Material und/oder ist so ausgelegt, dass sie bei Biegung gegenüber dem Gehäuse (2) das jeweilige Kippsegment radial und/oder tangential verschiebt.

14. Zusammenbau eines Konstruktionselements mit mindestens einer Montagebohrung und eines Kippsegmentlagers nach einem der vorhergehenden Ansprüche, wobei das Kippsegment so ausgelegt ist, dass es sich beim Einpressen in die Montagebohrung verformt.

15. Verfahren zur Herstellung eines Kippsegmentlagers (1) nach einem der Ansprüche 1-13, wobei das Kippsegmentlager (1) eine Zapfenöffnung (8) mit einem gewünschten Querschnitt aufweist. Das Verfahren umfasst:
Bereitstellung eines Konstruktionselements;
Bereitstellung eines Kippsegmentlagers (1), das in einer Montagebohrung eines Bauelements angeordnet werden kann. Das Kippsegmentlager umfasst ein verformbares Gehäuse (2) mit einem zentralen Hohlraum (7), mehrere schwenkbar mit dem Gehäuse verbundene und/oder integral mit diesem ausgebildete Kippsegmente (3), die im zentralen Hohlraum angeordnet sind. Die Kippsegmente bilden eine Zapfenöffnung zum Einsetzen eines Zapfens einer drehbaren Außenwelle (5). Das Gehäuse ist von einem unverformten Zustand, in dem die Zapfenöffnung einen ersten, beispielsweise kreisförmigen Querschnitt aufweist, in einen verformten Zustand verformbar, in dem die Zapfenöffnung einen zweiten, anderen Querschnitt aufweist.
Bestimmen des Ausmaßes, in dem das Gehäuse (2) verformt werden soll, damit die Zapfenöffnung den gewünschten Querschnitt aufweist.
Bereitstellen einer Montagebohrung im Konstruktionselement,
wobei die Montagebohrung eine Form und/oder Größe aufweist, die bei einer Verformung des Kippsegmentlagers im festgelegten Ausmaß in die Montagebohrung passt und die Verformung beibehält, wenn das Kippsegmentlager im Montageloch angeordnet ist;
Verformen des Gehäuses im festgelegten Ausmaß;
Aufrechterhalten der Verformung durch Anordnen des Kippsegmentlagers im Montageloch.

## Revendications

1. Palier à patins basculants (1) conçu pour être placé dans un trou de montage d'un élément de construction, comprenant :
un boîtier déformable (2) présentant une cavité centrale (7) ;
un certain nombre de patins basculants (3) reliés de manière pivotante au boîtier (2) et/ou formés d'un seul tenant avec celui-ci, et disposés à l'intérieur de la cavité centrale (7), les patins basculants définissant une ouverture de tourillon (8) pour l'insertion d'un tourillon d'un arbre externe rotatif (5) ;
le boîtier (2) étant déformable d'un état non déformé, dans lequel l'ouverture de tourillon (8) présente une première section transversale, à un état déformé dans lequel l'ouverture de tourillon présente une seconde section transversale différente ;
**caractérisé en ce que** le boîtier (2) est déformable car il comprend une ou plusieurs parties rigides (30) et une ou plusieurs parties flexibles (31), les parties rigides (30) sont reliées aux parties rigides adjacentes par l'intermédiaire des parties flexibles (31), chaque patin basculant (3) est relié de manière pivotante et/ou solidaire d'une partie rigide (30) du boîtier (2).

2. Palier à patin basculant (1) selon la revendication 1, dans lequel un premier élément de contact (12) et un second élément de contact (13) sont prévus sur la surface extérieure circonférentielle de la partie rigide (30) du boîtier, chacun des premier et second éléments de contact (12, 13) définissant un point de contact sur la partie rigide (30) correspondante.

3. Palier à patins basculants (1), selon la revendication 1 ou 2, dans lequel chaque patin basculant (3) présente une partie avant (33) et une partie arrière (32) par rapport au sens de rotation prévu de l'arbre externe et/ou du tourillon, et dans lequel l'élément pivotant (4) est disposé dans la partie avant (33) du patin basculant (3), l'élément pivotant étant en outre éventuellement disposé de manière à solliciter le patin associé dans une orientation inclinée, et/ou dans lequel l'espace entre le bord avant (9) de la partie avant (33) du patin basculant est éventuellement plus grand que l'espace entre le bord arrière (10) de la partie arrière (32) du patin basculant (3).

4. Palier à patins basculants selon la revendication 2 ou la revendication 3 lorsqu'elle dépend de la revendication 2, dans lequel, lorsque le boîtier (2) est déformé de l'état non déformé à l'état déformé, chacun des patins basculants se déplace dans une direction et sur une distance respectives, le déplacement comprenant une composante radiale et une composante tangentielle, et dans lequel le rapport entre la distance radiale et la distance tangentielle dépend de l'emplacement, de la forme et de la taille des premier et deuxième éléments de contact (12, 13), et éventuellement de la différence de taille entre ces éléments.

5. Palier à patins basculants selon l'une quelconque des revendications 2, 4 ou 3 lorsqu'elle dépend de la revendication 2, dans lequel chaque élément de contact (12, 13) est formé de manière à former un contact ponctuel ou linéaire avec la paroi du trou de montage.

6. Palier à patins basculants selon l'une quelconque des revendications 2, 4, 5 ou 3 lorsqu'elle dépend de la revendication 2, dans lequel au moins un des éléments de contact (12, 13) est prévu sous forme de plot de contact solidaire de la pièce rigide correspondante et/ou dans lequel au moins un des éléments de contact (12, 13) est une barre de contact, chaque barre de contact étant disposée dans une rainure de contact formée sur la surface extérieure de la pièce rigide associée du boîtier, comprenant éventuellement trois rainures de contact ou plus, et les deux barres de contact pouvant être disposées dans l'une ou l'autre combinaison de deux des trois rainures de contact ou plus.

7. Palier à patins basculants selon l'une quelconque des revendications précédentes, dans lequel le boîtier
(2) est au moins :
- déformé de l'état non déformé à l'état déformé lorsque le boîtier est emmanché à force dans un trou de montage ;
- configuré pour modifier la taille de la seconde section transversale en adaptant le degré de déformation du boîtier et/ou configuré pour être déformé dans une première mesure afin d'obtenir une première taille de la seconde section transversale ou dans une seconde mesure afin d'obtenir une seconde taille de la seconde section transversale ;
- configuré pour être déformé de l'état non déformé à l'état déformé par compression du boîtier dans la direction radiale et/ou par compression d'au moins une partie du boîtier dans la direction circonférentielle.

8. Palier à patins inclinables selon l'une quelconque des revendications précédentes, dans lequel les patins inclinables sont au moins :
- préchargés en inclinaison ;
- agencés pour définir une première précharge géométrique lorsque le boîtier est à l'état non déformé, et agencés pour définir une seconde précharge géométrique, cette seconde précharge géométrique étant différente de la première précharge géométrique, lorsque le boîtier est à l'état déformé.

9. Palier à patins basculants selon l'une quelconque des revendications précédentes, dans lequel chaque patin basculant est relié au boîtier ou formé d'un seul tenant avec celui-ci par l'intermédiaire d'un élément pivotant (4), l'élément pivotant étant de préférence constitué d'un matériau flexible et/ou l'élément pivotant étant de préférence configuré pour pousser le patin basculant associé dans une position inclinée par rapport à un axe central du boîtier.

10. Palier à patins inclinables selon l'une quelconque des revendications précédentes,
dans lequel la première section transversale est circulaire et la seconde section transversale non circulaire et/ou dans lequel, à l'état non déformé et déformé, l'ouverture du tourillon présente respectivement une première et une seconde section transversale, la seconde section transversale étant inférieure à la première section transversale.
dans lequel le boîtier est éventuellement configuré pour présenter, à l'état opérationnel déformé, une section transversale inférieure de 0,01 % à 5 %, ou de 0,1 % à 2 %, ou, de préférence, de 0,1 % à 1,0 %, à celle à l'état non déformé.

11. Palier à patins basculants selon l'une quelconque des revendications précédentes, **caractérisé en ce qu'**il est un palier lisse fluide auto-ajustable, conçu de préférence pour supporter le tourillon de l'arbre externe rotatif disposé dans l'ouverture du tourillon et/ou comprenant :
une pluralité de patins espacés circonférentiellement autour de l'ouverture du tourillon, chacun comprenant un bord d'attaque et un bord de fuite ;
un boîtier de palier déformable entourant les patins, après installation, le boîtier de palier déformable est déformé de telle sorte que lesdits patins se déplacent radialement vers l'intérieur et/ou tournent avec leur bord de fuite, en direction de l'arbre ;
et au moins un élément pivotant entre chacun des patins et le boîtier de palier déformable pour permettre un mouvement de pivotement desdits patins.

12. Palier à patins basculants selon l'une quelconque des revendications précédentes, dans lequel, lorsque le boîtier est déformé de l'état non déformé à l'état déformé, chacun des patins basculants se déplace dans une direction et sur une distance respectives, ce déplacement comprend une composante radiale, par laquelle le patin basculant se déplace radialement vers l'intérieur sur une distance radiale, et/ou une composante tangentielle, par laquelle le patin basculant se déplace dans le sens horaire ou antihoraire par rapport à un axe central sur une distance tangentielle, de préférence, le rapport entre la distance radiale et la distance tangentielle est compris entre 1:0, 1:1 ou 0:1.

13. Palier à patins basculants selon l'une quelconque des revendications précédentes, dans lequel un ou plusieurs patins basculants parmi les patins basculants (3) sont reliés au boîtier et/ou intégrés à celui-ci par une structure souple (46), cette structure souple (46) est de préférence constituée d'un matériau flexible et/ou est configurée pour, lorsqu'elle est pliée par rapport au boîtier (2), déplacer le patin basculant respectif dans le sens radial et/ou tangentiel.

14. Assemblage d'un élément de construction comprenant au moins un trou de montage et un palier à patins basculants selon l'une quelconque des revendications précédentes, le palier basculant étant configuré pour se déformer lorsqu'il est ajusté par pression dans le trou de montage.

15. Procédé de fabrication d'un palier à patins basculants (1) selon l'une quelconque des revendications 1 à 13, le palier à patins basculants (1) présentant une ouverture de tourillon (8) de section transversale souhaitée, le procédé comprenant :
la fourniture d'un élément de construction ;
fournir un palier à patins basculants (1) conçu pour être placé dans un trou de montage d'un élément de construction, ce palier comprend un boîtier déformable (2) doté d'une cavité centrale (7), plusieurs patins basculants (3) reliés de manière pivotante et/ou solidaires du boîtier et disposés à l'intérieur de la cavité centrale, les patins basculants définissent une ouverture de tourillon pour l'insertion d'un tourillon d'un arbre externe rotatif (5), le boîtier est déformable d'un état non déformé, dans lequel l'ouverture de tourillon présente une première section transversale, par exemple circulaire, à un état déformé, dans lequel l'ouverture de tourillon présente une seconde section transversale différente ;
déterminer le degré de déformation du boîtier (2) pour que l'ouverture de tourillon présente la section transversale souhaitée ;
prévoir un trou de montage dans l'élément de construction,
dont la forme et/ou la taille permettent, lorsque le palier à patin basculant est déformé jusqu'à la valeur déterminée, de l'adapter au palier et de maintenir la déformation lorsque le palier à patin basculant est placé dans le trou de montage ;
déformer le boîtier jusqu'à la valeur déterminée ;
maintenir la déformation en plaçant le palier à patin basculant dans le trou de montage.
